# EUROPÄISCHE PATENTSCHRIFT

(11) **EP 2 017 053 B1**
(45) Veröffentlichungstag und Bekanntmachung des Hinweises auf die Patenterteilung: **01.07.2015**
(21) Anmeldenummer: 08156415.5
(22) Anmeldetag: 19.05.2008
(51) Int. Cl.: B29C 33/60

(54) **Lösungsmittelfreies Trennmittel und seine Verwendung bei der Herstellung von Polyurethan-Formkörpern**
Solvent-free separating agent and its application in manufacturing polyurethane moulded bodies
Moyen de séparation sans solvant et son utilisation pour la fabrication de corps de formage en polyuréthane

(30) Priorität: 19.07.2007 EP 07112750
(43) Veröffentlichungstag der Anmeldung: 21.01.2009
(73) Patentinhaber: Evonik Degussa GmbH, 45128 Essen (DE)
(72) Erfinder: Henning, Torsten, 63457 Hanau (DE)

(56) Entgegenhaltungen:
- DE-A1- 3 821 908
- US-A- 4 399 088
- US-A- 5 218 024

## Beschreibung

Die Erfindung betrifft Trennmittel und ihre Verwendung bei der Herstellung von Polyurethan-Formkörpern.

Es ist bekannt, dass die zur Herstellung von Formkörpern verwendeten Polyurethansysteme gegenüber den verwendeten Formwerkstoffen, bevorzugt thermisch stark leitfähige Werkstoffe wie Metalle, eine starke Adhäsion zeigen. Daher benötigt man bei der Herstellung von Formkörpern aus Polyurethan in Formen aus den genannten Formwerkstoffen Trennmittel, die auf die mit Polyurethanen und/oder mit der Polyurethanreaktionsmischung in Berührung kommenden Formwandungen, aufgebracht werden.

Solche Trennmittel bestehen üblicherweise aus Dispersionen oder Emulsionen von Wachsen, Seifen, Ölen und/oder Siliconen in Lösungsmitteln wie Kohlenwasserstoffen. Nach Aufbringen des Trennmittels auf die Form verdampft das Lösungsmittel und die nichtflüchtigen trennaktiven Substanzen bilden einen dünnen Trennfilm, der eine leichte Entnahme des Polyurethan-Formkörpers nach der Herstellung aus der Form ermöglicht.

Neben der eigentlich benötigten Trennwirkung übernimmt das Trennmittel noch weitere Funktionen, so beeinflusst es auch sehr stark die Oberfläche des Polyurethan-Formkörpers, die feinporig bzw. glatt und gleichmäßig sein soll; unter anderem auch, um eine gute Beziehbarkeit der fertigen Formteile mit Stoffen oder Leder zu gewährleisten.

Um die Umweltbelastung mit flüchtigem organischem Material zu reduzieren, besteht ein hohes Interesse an Trennmitteln, die frei von flüchtigem organischem Material sind.

Eine Möglichkeit ist die Umstellung auf Wasser als Lösungsmittel bzw. Trägermedium für die trennaktiven Substanzen. Die im Markt befindlichen wässrigen Trennmittel zeigen jedoch gegenüber klassischen, organische Lösungsmittel enthaltenden Trennmitteln den Nachteil, dass nach dem Verdampfen eines Großteils des Wassers immer ein dünner Wasserfilm in der Form zurückbleibt, der sich bei den üblichen Formtemperaturen von 45 bis 80 °C, bevorzugt 50 bis 75 °C, nicht verflüchtigt und mit den Isocyanatverbindungen des Polyurethansystems Reaktionen eingeht, die zu sehr harten Polyharnstoffverbindungen führen. Diese bilden einen so genannten Aufbau auf der Formoberfläche, der die Trennwirkung nachteilig beeinflusst und aufwendig entfernt werden muss.

Typische Beispiele wässriger Trennmittel mit relativ guter Entformungswirkung sind beispielsweise beschrieben in DE-A-37 42 370 oder DE-C-40 20 036. Diese Mittel enthalten als trennwirksame Substanz ungesättigte oligomere oder polymere Kohlenwasserstoffe mit Molekulargewichten von mindestens 500 g/mol und Jodzahlen von mindestens 60, besonders bevorzugt flüssiges Polybutadien mit Molekulargewichten von ca. 3.000 g/mol und Jodzahlen von ca. 450.

Insbesondere nachteilig bei diesen Trennmitteln sind die auftretenden starken Verfärbungen, die durch Oxidation der Doppelbindungen hervorgerufen werden.

Ein weiteres Problem der oben zitierten Trennmittel ist das häufige Auftreten von Allergien bei Mitarbeitern, die mit diesen Trennmitteln oder den mit ihrer Hilfe hergestellten Formteilen arbeiten.

Diese Trennmittel zeigen neben dem oben beschriebenen Problem des Polyharnstoffaufbaus auf den Formoberflächen noch den weiteren Nachteil, dass die als zähfließendes Öl vorliegende trennwirksame Substanz die Arbeitsumgebung stark verschmutzt. Auf Maschinen und Anlagen bildet sich ein schlecht zu entfernender, klebriger Schmierfilm aus; auch bei großer Sorgfalt ist die Beschmutzung der Umgebung nicht mit Sicherheit zu vermeiden, so dass sich beispielsweise auf den Fußböden ein schlecht zu entfernender, rutschiger Schmierfilm ausbildet, der für die Mitarbeiter ein nicht akzeptables Gefahrenpotential bildet.

Durch die in den ungesättigten polymeren Kohlenwasserstoffen vorhandenen Doppelbindungen kann dieser Schmierfilm auch noch weiter reagieren, beispielsweise zu harzigen, klebrigen Schichten, die mit herkömmlichen Reinigungsmitteln kaum noch zu entfernen sind.

Die Schrift US 5,218,024 geht einen anderen Weg, hier werden flüssige polymere Polyene wie Polybutadiene mit Viskositäten von ungefähr 3.000 mPa s bei 20 °C lösungsmittelfrei eingesetzt. Teilweise werden sie versetzt mit Additiven wie Fetten, Wachsen oder Ölen zur Anpassung der Viskosität und/oder Verbesserung der Trennwirkung sowie weiteren Additiven wie etwa Antioxidantien. Gegebenenfalls werden diese Trennmittel heiß versprüht.

Diese Trennmittel basieren aber auf den gleichen Substanzen wie in den oben zitierten Schriften DE-A-37 42 370 oder DE-C-40 20 036 und erzeugen dadurch die gleichen Nachteile wie starke Verfärbungen und starke Verschmutzung der Arbeitsumgebung bis hin zum Aufbau von harzigen, klebrigen Schichten.

Aufgabe der vorliegenden Erfindung war es daher, Formtrennmittel zu finden, die frei sind von flüchtigen organischen Lösungsmitteln oder Wasser. Vorzugsweise sollten die Formtrennmittel die oben genannten Nachteile nicht aufweisen und insbesondere eine gute Trennwirkung zeigen, vorzugsweise die Oberflächen der Polyurethan-Formkörper günstig beeinflussen, also feinporig, gleichmäßig und glatt hinterlassen, bevorzugt keinen Polyharnstoffaufbau auf den Formoberflächen hinterlassen, besonders bevorzugt die Arbeitsumgebung nicht mit einem Schmierfilm verschmutzen und ganz besonders bevorzugt ein niedriges Allergiepotential haben.

Überraschenderweise wurde nun gefunden, dass eine Mischung von klassischen trennaktiven Wachsen zusammen mit trennaktiven Ölen ohne flüchtige Lösungsmittel, also ohne Lösungsmittel, die eine Siedetemperatur von < 250 °C oder einen Dampfdruck bei 293,15 Kelvin von > 0,01 Kilopascal aufweisen, diese Aufgabe erfüllt.

Gegenstand der Erfindung sind daher Trennmittel für die Herstellung von Polyurethan-Formkörpern, vorzugsweise im Wesentlichen enthaltend und besonders bevorzugt bestehend aus:
A) mindestens einem trennaktiven Wachs und
B) mindestens einem trennaktiven Öl,
C) ggf. weiteren Hilfs- und Zusatzstoffen,
mit der Maßgabe, dass das Trennmittel kein Wasser und keine flüchtigen organischen Lösungsmittel, die eine Siedetemperatur von < 250°C oder einen Dampfdruck bei 293,15 Kelvin von > 0,01 Kilopascal aufweisen aufweist und das trennaktive Öl im Wesentlichen frei, vorzugsweise vollständig frei von ungesättigten Kohlenwasserstoffen ist.

Ein weiterer Gegenstand der Erfindung ist die Verwendung dieser Trennmittel bei der Herstellung von Polyurethan-Formkörpern.

Das erfindungsgemäße Trennmittel hat den Vorteil, dass eine Belastung der Umwelt mit Dämpfen von Lösungsmitteln vermieden wird. Das erfindungsgemäße Trennmittel hat außerdem den Vorteil, dass der Aufbau von Polyharnstoff auf der Form vermieden wird. Eine weiterer Vorteil besteht darin, dass starke Verfärbungen und starke Verschmutzung und der Aufbau von harzigen, klebrigen Schichten verhindert wird.

Die erfindungsgemäßen Trennmittel und deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Die erfindungsgemäßen Trennmittel für die Herstellung von Polyurethan-Formkörpern zeichnen sich dadurch aus, dass sie
A) mindestens ein trennaktives Wachs und
B) mindestens ein trennaktives Öl,
C) ggf. weitere Hilfs- und Zusatzstoffe,
aufweisen, vorzugsweise im Wesentlichen aufweisen und bevorzugt daraus bestehen, mit der Maßgabe, dass das Trennmittel kein Wasser und kein flüchtiges organisches Lösungsmittel (flüchtige organische Verbindung, VOC) enthält und das trennaktive Öl im Wesentlichen frei (Anteil der ungesättigten Kohlenwasserstoffe am trennaktiven Öl von < 1 Massen-%, bevorzugt < 0,1 Massen-% und besonders bevorzugt < 0,01 Massen-%), vorzugsweise vollständig frei (Anteil der ungesättigten Kohlenwasserstoffe am trennaktiven Öl unterhalb der Nachweisgrenze) von ungesättigten Kohlenwasserstoffen ist.

Im Rahmen der vorliegenden Erfindung werden unter flüchtigen organischen Lösungsmitteln solche flüchtigen organischen Verbindungen (VOC) verstanden, die eine Siedetemperatur von < 250 °C oder einen Dampfdruck bei 293,15 Kelvin von > 0,01 Kilopascal aufweisen.

Bevorzugt enthalten die Trennmittel bzw. vorzugsweise bestehen diese aus:
A) 50 bis 99,5 Gew.-% trennaktivem Wachs und
B) 0,5 bis 50 Gew.-% trennaktivem Öl,
C) ggf. weiteren Hilfs- und Zusatzstoffen.

Besonders bevorzugt bestehen die Trennmittel aus:
A) 80 bis 99 Gew.-% trennaktivem Wachs und
B) 1 bis 20 Gew.-% trennaktivem Öl,
C) ggf. weiteren Hilfs- und Zusatzstoffen.

Als klassische trennaktive Wachse kann das erfindungsgemäße Trennmittel beispielsweise flüssige, feste, natürliche oder synthetische Wachse, auch oxidiert und/oder teilverseift, Ester von Carbonsäuren mit Alkoholen oder Fettalkoholen, oder Metallseifen, wie Alkali- oder Erdalkalimetallsalze von Fettsäuren, aufweisen. Besonders bevorzugt sind synthetische Paraffinwachse. Typische trennwirksame Wachse sind beispielsweise aufgeführt in den Firmenschriften "Waxes by Clariant, production, charcteristics and applications" Clariant Mai 2003 und "Formtrennmittel mit Vestowax®" Degussa Februar 2001.

Als trennaktive Öle können bei Raumtemperatur flüssige oder zähfließende gesättigte Kohlenwasserstoffe, gesättigte oligomere und/oder polymere Kohlenwasserstoffe und/oder, Siliconöle, wie Polydimethylsiloxane, gegebenenfalls substituiert mit aliphatischen oder aromatischen Kohlenwasserstoffresten verwendet werden. Bevorzugt werden als trennaktive Öle bei Raumtemperatur flüssige oder zähfließende gesättigte Kohlenwasserstoffe und/oder Polydimethylsiloxane verwendet.

Als trennaktive Öle können insbesondere Kohlenwasserstoffe eingesetzt werden, die eine Siedetemperatur von ≥ 250 °C oder einen Dampfdruck bei 293,15 Kelvin von ≤ 0,01 Kilopascal aufweisen. Diese Öle sind dann gemäß deutscher bzw. europäischer Definition in der 31. BImSchV keine leichtflüchtigen organischen Verbindungen mehr. Bevorzugt weist das erfindungsgemäße Trennmittel als Öl hochraffiniertes Mineralöl auf, bestehend aus naphthenischen, aromatischen und/oder paraffinischen Kohlenwasserstoffen. Bevorzugt zeigt das eingesetzte Öl eine kinematische Viskosität bei 40 °C nach DIN 51 562 T.1 zwischen 10 und 150 mm2/s, bevorzugt von 20 bis 100 mm2/s. Im Markt erhältlich sind diese Öle unter den Markennamen Gravex^{®}, Deutsche Shell AG, oder Pionier^{®}, Hansen & Rosenthal KG.

Als übliche Hilfs- und Zusatzstoffe können z. B. ein oder mehrere Verbindungen, ausgesucht aus den nachfolgend aufgeführten Gruppen, vorhanden sein bzw. eingesetzt werden.
I) Katalysatoren, insbesondere solche, die typischerweise für die Polyurethanreaktion verwendet werden, beispielsweise Lewis Säuren wie Zinnverbindungen, Alkalisalze oder organische Bismutsalze oder Lewis Basen wie tertiäre Amine;
II) Schaumstabilisatoren, wie z. B. Polysiloxan-Polyether-Copolymerisate. Solche werden z. B. in Ed. R. Herrington et al., Appendix E Surfactants, Flexible Polyurethane Foams, The Dow Chemical Company, 2nd edition, 1997 beschrieben.
III) Anorganische Materialien, insbesondere Mineralien, wie z. B. Talkum oder Mineralien aus der Familie der Schichtsilicate, auch Phyllosilicate, bezeichnet, die hauptsächlich aus Magnesiumsilicat bestehen und verschiedene Beimischungen wie Chlorit oder andere Begleitmineralien enthalten können. Auch Glimmer (Mica), also Schichtsilicate, in die große Kationen wie K⁺, Na⁺ oder Ca²⁺ eingebaut sind, kommen in Frage. Die Verwendung solcher anorganischer Materialien als Hilfsstoffe in erfindungsgemäßen Trennmitteln hat den Vorteil, dass mit ihnen eine Verbesserung der Trennwirkung und Oberflächeneigenschaften der hergestellten Formteile erreicht werden kann.

Die erfindungsgemäßen Trennmittel können nach den im Stand der Technik bekannten Verfahren hergestellt werden. Bevorzugt geht man so vor, dass die trennaktiven Wachse in geschmolzener Form vorgelegt werden und das Öl dann, gegebenenfalls zusammen mit Hilfs- und Zusatzstoffen eingetragen wird.

Anschließend kann das Trennmittel, falls es sich bei Raumtemperatur um einen Feststoff handelt, pelletiert oder geschuppt werden.

Die erfindungsgemäßen Trennmittel können bei der Herstellung von Polyurethan-Formkörpern, z. B. bei der Herstellung von Autositzen, Matratzen etc. eingesetzt werden.

Bei der Herstellung von Polyurethan-Formkörpern kann die Form z. B. zunächst auf die gewünschte Formtemperatur von vorzugsweise 45 bis 80 °C, bevorzugt 50 bis 75 °C, gebracht werden. Anschließend wird die Form mit dem Trennmittel ausgestattet. Das kann z. B. so erfolgen, dass die Form mit dem Trennmittel fein und gleichmäßig eingesprüht wird und dann eine gewisse Zeit gewartet wird, bis sich ein gleichmäßiger Trennfilm gebildet hat. In die mit dem Trennmittel ausgestattete Form kann dann das reaktive Polyurethansystem aus Polyolen, Polyisocyanaten und gegebenenfalls weiteren Additiven wie Katalysatoren, Schaumstabilisatoren und Treibmitteln, eingepumpt werden. Die Form wird anschließend geschlossen. Nach der Aushärtezeit wird die Form geöffnet und das Formteil entformt.

Es kann vorteilhaft sein, das erfindungsgemäße Trennmittel vor dem Aufbringen auf die Form oberhalb des jeweiligen Schmelzbereichs zu erhitzen. Es existieren auch Geräte, die das Sprühen von zwei getrennten Fraktionen erlauben, so dass alle Komponenten des erfindungsgemäßen Trennmittels gegebenenfalls erst direkt auf der Form zusammengebracht werden und sich der Trennfilm aus erfindungsgemäßem Trennmittel erst in der Form unmittelbar vor dem Einpumpen der reaktiven Polyurethanmischung bildet.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

Liste der eingesetzten Substanzen:
- synthetisches Paraffinwachs = handelsübliche Wachse mit einer Erstarrungstemperatur von 50 bis 100 °C,
- Magnesiumstearat,
- Pionier^{®} 2071 T = technisches Weißöl, aromatenarm, Hersteller: Hansen & Rosenthal KG,
- Kosmos^{®} 19 = Dibutylzinndilaurat (DBTL), Hersteller: Degussa GmbH,
- DC^{®} 190 = Polyethersiloxan, Hersteller: Air Products Inc.,
- Desmophen^{®} PU 21IK01 = Polyetherpolyol, Hersteller: Bayer AG,
- Tegoamin^{®} TA 33, Hersteller: Degussa GmbH,
- Tegoamino^{®} AS-1, Hersteller: Degussa GmbH,
- Tegostab^{®} EP-K-38 = organomodifiziertes Siloxan, Hersteller: Degussa GmbH,
- Suprasec^{®} 2412 - Diphenylmethan-4,4'-diisocyanat, Hersteller: Huntsman Inc..

### Beispiel 1:

### Erfindungsgemäßes Trennmittel, VOC-frei

80,0 Gew.-% synthetisches Paraffinwachs (Erstarrungspunkt 95 °C) und 5,0 Gew.-% Magnesiumstearat werden aufgeschmolzen und mit 5,0 Gew.-% Pionier^{®} 2071 T versetzt. Die Wachsschmelze wird unter Rühren mit 5,0 Gew.-% Kosmos^{®} 19 und 5,0 Gew.-% DC^{®} 190 versetzt.

### Beispiel 2:

### Erfindungsgemäßes Trennmittel, VOC-frei

90,0 Gew.-% synthetisches Paraffinwachs (Erstarrungspunkt 100 °C) und 5,0 Gew.-% Magnesiumstearat werden aufgeschmolzen und mit 5,0 Gew.-% Pionier^{®} 2071 T versetzt.

### Vergleichsbeispiel A:

### Klassisches VOC-haltiges Trennmittel

4,5 Gew.-% synthetisches Paraffinwachs (Erstarrungspunkt 95 °C) und 0,5 Gew.-% Magnesiumstearat werden aufgeschmolzen und mit 45 Gew.-% Isoparaffin (Flammpunkt 56 °C) versetzt. 48,5 Gew.-% Isoparaffin (Flammpunkt 56 °C) werden mit 0,5 Gew.-% Kosmos^{®} 19 und 1 Gew.-% DC^{®} 190 versetzt und zu der Wachsdispersion unter Rühren zugegeben.

### Versuche zur Trennwirkung:

Die Trennmittel gemäß Beispiel 1 und 2 sowie gemäß Vergleichsbeispiel A wurden mittels einer 0,5 mm Düse in praxisnahen Mengen von 10 g/m² auf Testmetallplatten aufgesprüht und ein schäumbares Polyurethansystem bestehend aus 100 Teilen Desmophen^{®} PU 21IK01, 3,5 Teilen Wasser, 0,4 Teilen Tegoamin^{®} TA 33, 0,25 Teilen Tegoamin^{®} AS-1, 0,7 Teilen Diethanolamin, 0,5 Teilen Tegostab^{®} EP-K-38, 0,2 Teilen Essigsäure (60 % in Wasser), 63,5 Teilen Suprasec^{®} 2412 auf diese Platten in einer Kastenform bei 55 °C aufgeschäumt.

Nach dem Aushärten (10 Minuten) wurden die Metallplatten unter Verwendung eines Federkraftmessers vom Schaum abgezogen, um ein Maß für die Trennwirkung zu messen. Die Ergebnisse sind in Tabelle 1 zusammengefasst.

**Tabelle 1:**

| Ergebnisse der Bestimmung der Trennwirkung | | |
|---|---|---|
| Trennmittel gemäß Beispiel | Beurteilung der Schaumoberfläche | Kraft zum Abziehen der Metallplatte vom Schaum [kg] |
| 1* | feinporig offen, trocken | 2 |
| 2 | feinporig offen, trocken | 2 |
| A | feinporig offen, trocken | 2 |

Wie aus obiger Tabelle ersichtlich, erfüllen die erfindungsgemäßen VOC-freien Trennmittel die Anforderungen hinsichtlich Trennwirkung und Poreneigenschaften der Schaumteile. Sie weisen aufgrund Ihrer VOC-Freiheit deutliche Vorteile gegenüber dem Trennmittel A auf Basis klassischer Lösungsmittel auf.

## Patentansprüche

1. Trennmittel für die Herstellung von Polyurethan-Formkörpern enthaltend
A) mindestens ein trennaktives Wachs,
B) mindestens ein trennaktives Öl und
C) ggf. weitere Hilfs- und Zusatzstoffe,
mit der Maßgabe, dass das Trennmittel kein Wasser und keine flüchtigen organischen Lösungsmittel, die eine Siedetemperatur von < 250 °C oder einen Dampfdruck bei 293,15 Kelvin von > 0,01 Kilopascal aufweisen, aufweist und das trennaktive Öl im Wesentlichen frei von ungesättigten Kohlenwasserstoffen ist.

2. Trennmittel gemäß Anspruch 1 enthaltend
A) mindestens ein trennaktives Wachs, ausgewählt aus flüssigen, festen, natürlichen oder synthetischen Wachsen, die auch oxidiert und/oder teilverseift sein können, Estern von Carbonsäuren mit Alkoholen oder Fettalkoholen und/oder Metallseifen von Fettsäuren,
B) mindestens ein trennaktives Öl, ausgewählt aus bei Raumtemperatur flüssigen oder zähfließenden Kohlenwasserstoffen, gesättigten oligomeren und/oder polymeren Kohlenwasserstoffen und Siliconölen, die gegebenenfalls mit aliphatischen oder aromatischen Kohlenwasserstoffresten substituiert sein können, und
C) ggf. weitere Hilfs- und Zusatzstoffe, mit der Maßgabe, dass das Trennmittel keine flüchtigen organischen Lösungsmittel, die eine Siedetemperatur von < 250 °C oder einen Dampfdruck bei 293,15 Kelvin von > 0,01 Kilopascal aufweisen, enthält.

3. Trennmittel nach Anspruch 1 oder 2, bestehend aus
A) 50 bis 99,5 Gew.-% trennaktivem Wachs und
B) 0,5 bis 50 Gew.-% trennaktivem Öl und
C) ggf. weiteren Hilfs- und Zusatzstoffen.

4. Trennmittel nach mindestens einem der Ansprüche 1 bis 3, **dadurch gekennzeichnet, dass** es als trennaktives Wachs ein synthetisches Paraffinwachs aufweist.

5. Trennmittel nach zumindest einem der Ansprüche 1 bis 4, **dadurch gekennzeichnet, dass** es als trennaktives Öl einen Kohlenwasserstoff mit einem Dampfdruck bei 293,15 Kelvin von ≤ 0,01 Kilopascal aufweist.

6. Verwendung der Trennmittel gemäß zumindest einem der Ansprüche 1 bis 5 zur Herstellung von Polyurethan-Formkörpern.

## Claims

1. Release agent for producing polyurethane moldings, comprising
A) at least one wax having release activity,
B) at least one oil having release activity, and
C) if desired, further auxiliaries and adjuvants, with the proviso that the release agent contains no water and no volatile organic solvents which have a boiling temperature of < 250°C or a vapor pressure at 293.15 kelvins of > 0.01 kilopascal, and the oil with release activity is substantially free from unsaturated hydrocarbons.

2. Release agent according to Claim 1, comprising
A) at least one wax having release activity, selected from liquid, solid, natural or synthetic waxes, which may also have been oxidized and/or partly hydrolyzed, esters of carboxylic acids with alcohols or fatty alcohols and/or metal soaps of fatty acids,
B) at least one oil having release activity, selected from hydrocarbons which are viscous or liquid at room temperature, saturated oligomeric and/or polymeric hydrocarbons, and silicone oils, which if desired may be substituted by aliphatic or aromatic hydrocarbon radicals, and
C) if desired, further auxiliaries and adjuvants, with the proviso that the release agent contains no volatile organic solvents which have a boiling temperature of < 250°C or a vapor pressure at 293.15 kelvins of > 0.01 kilopascal.

3. Release agent according to Claim 1 or 2, consisting of
A) 50% to 99.5% by weight of wax having release activity and
B) 0.5% to 50% by weight of oil having release activity, and
C) if desired, further auxiliaries and adjuvants.

4. Release agent according to at least one of Claims 1 to 3, **characterized in that** it comprises as wax with release activity a synthetic paraffin wax.

5. Release agent according to at least one of Claims 1 to 4, **characterized in that** it comprises as oil with release activity a hydrocarbon having a vapor pressure at 293.15 kelvins of ≤ 0.01 kilopascal.

6. Use of the release agents according to at least one of Claims 1 to 5 for producing polyurethane moldings.

## Revendications

1. Agent de démoulage pour la production de corps façonnés en polyuréthane, contenant
A) au moins une cire tensioactive,
B) au moins une huile tensioactive et
C) le cas échéant d'autres adjuvants et additifs,
à condition que l'agent de séparation ne présente pas d'eau ni de solvants organiques volatils, qui présentent une température d'ébullition < 250°C ou une tension de vapeur à 293,15 K > 0,01 kilopascal et que l'huile tensioactive soit essentiellement exempte d'hydrocarbures insaturés.

2. Agent de démoulage selon la revendication 1, contenant
A) au moins une cire tensioactive, choisie parmi les cires liquides, solides, naturelles ou synthétiques, qui peuvent également être oxydées et/ou partiellement saponifiées, les esters d'acides carboxyliques avec des alcools ou des alcools gras et/ou les savons métalliques d'acides gras,
B) au moins une huile tensioactive, choisie parmi les hydrocarbures, les oligomères saturés et/ou les hydrocarbures polymères et les huiles siliconées, qui peuvent le cas échéant être substituées par des radicaux hydrocarbonés aliphatiques ou aromatiques, liquides ou visqueux à température ambiante, et
C) le cas échéant d'autres adjuvants et additifs, à condition que l'agent de séparation ne présente pas d'eau ni de solvants organiques volatils, qui présentent une température d'ébullition < 250°C ou une tension de vapeur à 393,15 K > 0,01 kilopascal.

3. Agent de démoulage selon la revendication 1 ou 2, constitué par
A) 50 à 99,5% en poids de cire tensioactive et
B) 0,5 à 50% en poids d'huile tensioactive et
C) le cas échéant d'autres adjuvants et additifs.

4. Agent de démoulage selon au moins l'une quelconque des revendications 1 à 3, **caractérisé en ce qu'**il contient, comme cire tensioactive, une cire de paraffine synthétique.

5. Agent de séparation selon au moins l'une quelconque des revendications 1 à 4, **caractérisé en ce qu'**il contient, comme huile tensioactive, un hydrocarbure présentant une tension de vapeur à 293,15 Kelvin ≤ 0,01 kilopascal.

6. Utilisation de l'agent de démoulage selon au moins l'une quelconque des revendications 1 à 5 pour la production de corps façonnés en polyuréthane.
